# EUROPÄISCHE PATENTSCHRIFT

(11) **EP 2 533 631 B1**
(45) Veröffentlichungstag und Bekanntmachung des Hinweises auf die Patenterteilung: **22.11.2017**
(21) Anmeldenummer: 11702061.0
(22) Anmeldetag: 07.02.2011
(51) Int. Cl.: A01N 25/02, A01N 25/04, A01N 37/34, A01N 43/40, A01N 43/56, A01N 43/653, A01N 47/24, A01P 3/00, A01P 7/02, A01P 7/04, A01P 21/00

(54) **WASSERFREIE ZUSAMMENSETZUNG UMFASSEND EIN GELÖSTES UND EIN SUSPENDIERTES PESTIZID, ALKYLLACTAT UND ALKOHOL**
ANHYDROUS COMPOSITION COMPRISING A DISSOLVED PESTICIDE, A SUSPENDED PESTICIDE, AN ALKYL LACTATE AND AN ALCOHOL
COMPOSITION ANHYDRE COMPRENANT UN PESTICIDE EN SOLUTION ET UN PESTICIDE EN SUSPENSION, UN LACTATE D'ALKYLE ET UN ALCOOL

(30) Priorität: 12.02.2010 EP 10153451
(43) Veröffentlichungstag der Anmeldung: 19.12.2012
(73) Patentinhaber: BASF SE, 67056 Ludwigshafen am Rhein (DE)
(72) Erfinder: MERTOGLU, Murat, 67063 Ludwigshafen (DE); MAYER, Winfried, 55270 Bubenheim (DE); STROBEL, Dieter, 67273 Herxheim am Berg (DE); BERGHAUS, Rainer, 67346 Speyer (DE); STRATHMANN, Siegfried, 67117 Limburgerhof (DE)
(74) Vertreter: BASF IP Association
(86) Internationale Anmeldenummer: PCT/EP2011/051733
(87) Internationale Veröffentlichungsnummer: WO 2011/098419

(56) Entgegenhaltungen:
- EP-A1- 0 024 188
- EP-A1- 1 314 356
- EP-A1- 1 787 516
- WO-A1-00/18227
- WO-A1-87/06428
- WO-A1-91/14366
- WO-A1-03/003830
- WO-A1-03/075657
- WO-A1-2005/074685
- WO-A2-2007/028538
- GIROUD-DUVAL LAURENCE ET AL: "Bell: fongicide céréales blés et orges = Bell: a wheat and barley grain fungicide", PHYTOMA. LA DEFENSE DES VEGETAUX, RURALIA, BOULOGNE, FR, FR, Bd. 599, 1. Januar 2006 (2006-01-01), Seiten 52-53, XP009152275, ISSN: 1164-6993
- VAN DER POL J F ET AL: "Phytotoxicity and adjuvancy of lactate esters in 2,4-D based agrochemical formulations", CAPLUS, 2005, XP002425214,

## Beschreibung

Gegenstand der vorliegenden Erfindung ist eine wasserfreie Formulierung umfassend a) ein erstes Pestizid in gelöster Form, b) ein zweites Pesitzid in Form suspendierter Teilchen, c) ein Alkyllactat, und d) einen Alkohol. Ein weiterer Gegenstand ist ein Verfahren zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen, wobei man die genannte Formulierung auf die jeweiligen Schädlinge, deren Lebensraum oder die vor dem jeweiligen Schädling zu schützenden Pflanzen, den Boden und/oder auf unerwünschte Pflanzen und/oder die Nutzpflanzen und/oder deren Lebensraum einwirken lässt. Weiterhin betrifft die Erfindung die Verwendung der Formulierung zur Erhöhung der Regenfestigkeit der applizierten Pestizide. Kombinationen bevorzugter Merkmale mit anderen bevorzugten Merkmalen werden von der vorliegenden Erfindung umfasst.

Agrochemische Formulierungen sollten idealerweise sowohl kurativ als auch präventiv wirksam sein. Einige der bekannten Pestizide sind besonders kurativ wirksam, während andere Pestizide besonders präventiv wirksam sind. So hat beispielsweise Boscalid gute präventive Wirksamkeit, wenn es als suspendierte Teilchen fein über die Blattoberfläche verteilt appliziert wird. Epoxiconazol ist beispielsweise besonders kurativ wirksam, wenn es als Emulsion appliziert wird. Grundsätzlich ist es möglich Mischungen von solchen Pestiziden als Tankmischung direkt im Sprühtank aus den separaten Formulierungen herzustellen, beispielsweise aus einem Suspensionskonzentrat von Boscalid und einem Emulsionskonzentrat von Epoxiconzol. Tankmischungen sind aber erfahrungsgemäß nachteilig, weil verschiedene Formulierungen gehandhabt und ihre Mischungsverhältnisse eingestellt werden müssen. Oft soll noch zusätzlich ein drittes Pestizid zugesetzt werden, beispielsweise zu einer Mischung aus kurativem und präventiven Fungiziden soll noch ein Herbizid, Insektizid oder Wachstumsregulator zugemischt werden. Hier ist die Kompabilität der drei Formulierungen sehr schwer vorherzusagen.

EP 0024188 A1 beschreibt Formulierungskonzentrate wasserlöslicher Salze des Herbizids Difenzoquat enthaltend mindestens eine oberflächenaktive Substanz (Surfactant) und ein nicht-wässriges organisches Lösungsmittel enthaltend mindestens ein wasserunlösliches Lösungsmittel. Es wird beschrieben, dass solche Formulierungen weitere Wirkstoffe aufnehmen können, welche nicht wasserlöslich sind, und dass diese üblicherweise in wasserunlöslichen Lösungsmitteln formuliert werden. EP 0024188 A1 zitiert die Patentschrift GB 1454907. Dort wird angegeben, dass es zur kominierten Ausbringung von Difenzoquat mit einem weiteren schwer wasserlöslichen Pestizid bis dahin notwendig gewesen war, diese kurz vor Ausbringung direkt im Sprühtank zu mischen.

WO 2000/18227 offenbart ein nicht-wässriges Suspensionskonzentrat umfassend 50 bis 400 g/l eines Pflanzenschutzmittels, 50 bis 700 g/l eines Adjuvants und 75 bis 500 g/l eines Lösungsmittels, wie Alkyllactate. Dabei kann das Suspensionkonzentrat eine Mischung von Wirkstoffen enthalten, wobei einer der Wirkstoffe in der kontinuierlichen Phase gelöst ist.

WO 2005/074685 offenbart eine Zusammensetzung für den Pflanzenschutz umfassend 2-Ethylhexyllactat, darin gelöste agrochemische Wirkstoffe und weitere Formulierungshilfsmittel wie Benzylalkohol.

WO 2007/028538 offenbart die Verwendung von Alkyllactaten zur Verbesserung der Wirkung von Pflanzenschutzmitteln, wie Pyraclostrobin oder Epoxiconazol.

WO 2003/075657 offenbart eine flüssige pestizide Zusammensetzung umfassend eines oder mehrere Pestizide als Wirkstoff und ein Lactatester als Kristallisationsinhibitor. Geeignete Pestizide sind beispielsweise Epoxiconazol oder Pyraclostrobin.

Die Formulierungen nach dem Stand der Technik weisen verschiedenen Nachteile auf: Suspensionkonzentrate und Emulsionskonzentrate mussten bisher im Tank vom Anwender selber gemischt werden. Die Formulierungen waren nicht lagerstabil oder kristallisierten aus. Die Regenfestigkeit der so formulierten Pestizide war gering. Die Pestizide wurden nur langsam oder in kleinen Mengen in das Blatt der behandelten Pflanze aufgenommen. Die Pestizide zeigen eine geringe Wirksamkeit.

Aufgabe der vorliegenden Erfindung war daher eine Formulierung enthaltend mindestens zwei Pestizide zu finden, wobei sowohl ein suspendiertes als auch ein gelöster Wirkstoff in einer einzigen Formulierung kombiniert ist. Die Formulierung sollte hohe Regenfestigkeit aufweisen. Sie sollte sehr gut in die Blattoberfläche aufgenommen werden. Die Formulierung sollte auch lagerstabil sein.

Die Aufgabe wurde gelöst durch eine wasserfreie Formulierung umfassend
a) ein erstes Pestizid in gelöster Form
b) ein zweites Pestizid in Form suspendierter Teilchen
c) 15 bis 50 Gew.% 2-Ethylhexyllactat, und
d) 3 bis 30 Gew.% Alkohol, wobei der Alkohol ein organisches Lösungsmittel mit einer Alkoholgruppe ist, und wobei das Gewichtsverhältnis von 2-Ethylhexyllactat zu dem Alkohol im Bereich von 5/1 bis 1 / 1 liegt.

**Wasserfreie** Formulierungen enthalten meist höchstens 5 Gew.% Wasser, bevorzugt höchstens 1 Gew.%, besonders bevorzugt höchstens 0,5 Gew.% und insbesondere höchstens 0,1 Gew.%.

Das erste Pestizid liegt in **gelöster Form** vor. Meist sind mindestens 90 Gew.% des ersten Pestizides gelöst, bevorzugt mindestens 95 Gew.% und insbesondere mindestens 99 Gew.%. Das erste Pestizid ist in der Regel in einer kontinuierlichen Phase der Formulierung gelöst.

Das zweite Pestizid liegt in Form **suspendierter Teilchen** vor. Meist sind mindestens 90 Gew.% des zweiten Pestizides suspendiert, bevorzugt mindestens 95 Gew.% und insbesondere mindestens 99 Gew.%.

Die mittlere **Teilchengröße** des zweiten Pestizides kann als D₁₀, D₂₀ oder D₉₀ (d.h. Teilchengröße für die 10 %, 20 % bzw. 90 % der Teilchen kleiner sind) bestimmt werden. Bevorzugt ist D₁₀ kleiner als 8,0 µm, besonders bevorzugt kleiner als 4,0 µm. In einer weiteren bevorzugten Auführungsform ist D₂₀ kleiner als 8,0 µm, besonders bevorzugt kleiner als 4,0 µm. In einer weiteren bevorzugten Auführungsform ist D₉₀ kleiner als 50,0 µm, besonders bevorzugt kleiner als 25,0 µm. Die mittlere Teilchengröße wird dazu üblicherweise bestimmt nach CIPAC Methode MT 187 "PARTICLE SIZE ANALYSIS BY LASER DIFFRACTION".

Der Alkohol enthält als funktionelle Gruppen bevorzugt nur mindestens eine alkoholische Gruppe, die beispielsweise ein primäre Alkoholgruppe oder eine phenolischer Alkoholgruppe sein kann. Der Alkohol enthält bevorzugt einen Arylrest, der bis zu zwei Heteroatomen enthalten kann, wie Phenylrest oder Naphthylrest. Besonders bevorzugt ist der Alkohol Benzylalkohol oder 2-(1-Methylpropyl)phenol (auch als "o-sec Butylphenol" bekannt), insbesondere Benzylalkohol. Die Formulierung kann ein oder mehrere Alkohole umfassen, wobei sie bevorzugt genau einen Alkohol umfasst.

Die Formulierung enthält in der Regel 3 bis 30 Gew.% und insbesondere 7 bis 18 Gew.% Alkohol.

Das **Gewichtsverhältnis von Alkyllactat** zu **Alkohol** liegt im Bereich von 5 / 1 bis 1/1. Üblicherweise bilden das Alkyllactat und der Alkohol eine homogene, kontinuierliche Phase in der Formulierung.

Der Begriff **Pestizide** bezeichnet mindestens einen Wirkstoff ausgewählt aus der Gruppe der Fungizide, Insektizide, Nematizide, Herbizide, Safener und/oder Wachstumsregulatoren. Bevorzugte Pestizide sind Fungizide, Insektizide, Herbizide, und Wachstumsregulatoren. Besonders bevorzugte Pestizide sind Wachstumsregulatoren. Auch Mischungen von Pestiziden aus zwei oder mehr der vorgenannten Klassen können verwendet werden. Der Fachmann ist vertraut mit solchen Pestiziden, die beispielsweise in Pesticide Manual, 14th Ed. (2006), The British Crop Protection Council, London, gefunden werden können. Geeignete Pestizide sind :
A) Strobilurine:
   Azoxystrobin, Dimoxystrobin, Coumoxystrobin, Coumethoxystrobin, Enestroburin, Fluoxastrobin, Kresoxim-methyl, Metominostrobin, Orysastrobin, Picoxystrobin, Pyraclostrobin, Pyrametostrobin, Pyraoxystrobin, Pyribencarb, Trifloxystrobin, 2-[2-(2,5-Dimethylphenyl-oxymethyl)phenyl]-3-methoxy-acrylsäuremethylester, 2-(2-(3-(2,6-dichlorphenyl)-1-methyl-allylideneaminooxymethyl)-phenyl)-2-methoxyimino-N-methyl-acetamide;
B) Carbonsäureamide:
   - Carbonsäureanilide: Benalaxyl, Benalaxyl-M, Benodanil, Bixafen, Boscalid, Carboxin, Fenfuram, Fenhexamid, Flutolanil, Fluxapyroxad, Furametpyr, Isopyrazam, Isotianil, Kiralaxyl, Mepronil, Metalaxyl, Metalaxyl-M (Mefenoxam), Ofurace, Oxadixyl, Oxycarboxin, Penflufen, Penthiopyrad, Sedaxane, Tecloftalam, Thifluzamide, Tiadinil, 2-Amino-4-methyl-thiazol-5-carboxanilid, N-(4'-Trifluormethylthiobiphenyl-2-yl)-3-difluormethyl-1-methyl-1H-pyrazol-4-carboxamid, N-(2-(1,3,3-Trimethyl-butyl)-phenyl)-1,3-dimethyl-5-fluor-1H-pyrazol-4-carboxamid;
   - Carbonsäuremorpholide: Dimethomorph, Flumorph, Pyrimorph;
   - Benzoesäureamide: Flumetover, Fluopicolide, Fluopyram, Zoxamid;
   - Sonstige Carbonsäureamide: Carpropamid, Diclocymet, Mandipropamid, Oxytetracyclin, Silthiofam, N-(6-methoxy-pyridin-3-yl)cyclopropancarbonsäureamid;
C) Azole:
   - Triazole: Azaconazol, Bitertanol, Bromuconazol, Cyproconazol, Difenoconazol, Diniconazol, Diniconazol-M, Epoxiconazol, Fenbuconazol, Fluquinconazol, Flusilazol, Flutriafol, Hexaconazol, Imibenconazol, Ipconazol, Metconazol, Myclobutanil, Oxpoconazol, Paclobutrazol, Penconazol, Propiconazol, Prothioconazol, Simeconazol, Tebuconazol, Tetraconazol, Triadimefon, Triadimenol, Triticonazol, Uniconazol;
   - Imidazole: Cyazofamid, Imazalil, Imazalilsulfat, Pefurazoat, Prochloraz, Triflumizol;
   - Benzimidazole: Benomyl, Carbendazim, Fuberidazole, Thiabendazol;
   - Sonstige: Ethaboxam, Etridiazol, Hymexazol, 2-(4-Chlor-phenyl)-N-[4-(3,4-dimethoxyphenyl)-isoxazol-5-yl]-2-prop-2-inyloxy-acetamid;
D) Stickstoffhaltige Heterocyclylverbindungen
   - Pyridine: Fluazinam, Pyrifenox, 3-[5-(4-Chlor-phenyl)-2,3-dimethyl-isoxazolidin-3-yl]-pyridin, 3-[5-(4-Methyl-phenyl)-2,3-dimethyl-isoxazolidin-3-yl]-pyridin;
   - Pyrimidine: Bupirimat, Cyprodinil, Diflumetorim, Fenarimol, Ferimzone, Mepanipyrim, Nitrapyrin, Nuarimol, Pyrimethanil;
   - Piperazine: Triforine;
   - Pyrrole: Fludioxonil, Fenpiclonil;
   - Morpholine: Aldimorph, Dodemorph, Dodemorphacetat, Fenpropimorph, Tridemorph;
   - Piperidine: Fenpropidin;
   - Dicarboximide: Fluorimid, Iprodione, Procymidone, Vinclozolin;
   - nichtaromatische 5-Ring-Heterocyclen: Famoxadon, Fenamidon, Flutianil, Octhilinon, Probenazol, 5-Amino-2-isopropyl-3-oxo-4-ortho-tolyl-2,3-dihydropyrazol-1-thiocarbonsäure-S-allylester;
   - sonstige: Acibenzolar-S-methyl, Amisulbrom, Anilazin, Blasticidin-S, Captafol, Captan, Chinomethionat, Dazomet, Debacarb, Diclomezine, Difenzoquat, Difenzoquat-methylsulfat, Fenoxanil, Folpet, Oxolinsäure, Piperalin, Proquinazid, Pyroquilon, Quinoxyfen, Triazoxid, Tricyclazol, 2-Butoxy-6-jod-3-propyl-chromen-4-on, 5-Chlor-1-(4,6-dimethoxy-pyrimidin-2-yl)-2-methyl-1H-benzoimidazol, 5-Chlor-7-(4-methyl-piperidin-1-yl)-6-(2,4,6-trifluor-phenyl)-[1,2,4]triazolo[1,5-a]pyrimidin, 5-Ethyl-6-octyl-[1,2,4]triazolo[1,5-a]pyrimidin-7-ylamin;
E) Carbamate und Dithiocarbamate
   - Thio- und Dithiocarbamate: Ferbam, Mancozeb, Maneb, Metam, Methasulphocarb, Metiram, Propineb, Thiram, Zineb, Ziram;
   - Carbamate: Diethofencarb, Benthiavalicarb, Iprovalicarb, Propamocarb, Propamocarbhydrochlorid, Valiphenal, N-(1-(1-(4-Cyanophenyl)ethansulfonyl)-but-2-yl)carbaminsäure-(4-fluorphenyl)ester;
F) Sonstige Fungizide
   - Guanidine: Dodine, Dodine freie Base, Guazatin, Guazatinacetat, Iminoctadin, Iminoctadintriacetat, Iminoctadin-tris(albesilat);
   - Antibiotika: Kasugamycin, Kasugamycinhydrochlorid-Hydrat, Polyoxine, Streptomycin, Validamycin A;
   - Nitrophenylderivate: Binapacryl, Dicloran, Dinobuton, Dinocap, Nitrothal-isopropyl, Tecnazen;
   - Organometallverbindungen: Fentin-Salze wie beispielsweise Fentin-acetat, Fentin-chlorid, Fentin-hydroxid;
   - Schwefelhaltige Heterocyclylverbindungen: Dithianon, Isoprothiolane;
   - Organophosphorverbindungen: Edifenphos, Fosetyl, Fosetyl-Aluminium, Iprobenfos, Phosphorige Säure und ihre Salze, Pyrazophos, Tolclofos-methyl;
   - Organochlorverbindungen: Chlorthalonil, Dichlofluanid, Dichlorphen, Flusulfamide, Hexachlorbenzol, Pencycuron, Pentachlorphenol und dessen Salze, Phthalid, Quintozen, Thiophanat-Methyl, Tolylfluanid, N-(4-Chlor-2-nitro-phenyl)-N-ethyl-4-methyl-benzolsulfonamid;
   - Anorganische Wirkstoffe: Phosphorige Säure und ihre Salze, Bordeaux Brühe, Kupfersalze wie beispielsweise Kupferacetat, Kupferhydroxid, Kupferoxychlorid, basisches Kupfersulfat, Schwefel;
   - Biologische Pilzbekämpfungsmittel, Pflanzenstärkungsmittel: *Bacillus subtilis*-Stamm NRRL-Nr. B-21661 (z.B. die Produkte RHAPSODY®, SERENADE® MAX und SERENADE® ASO der Fa. AgraQuest, Inc., USA.), *Bacillus pumilus-*Stamm NRRL-Nr. B-30087 (z.B. SONATA® and BALLAD® Plus der Fa. AgraQuest, Inc., USA), *Ulocladium oudemansii*(z.B*.* BOTRY-ZEN der Fa. BotriZen Ltd., Neuseeland), Chitosan (z.B. ARMOUR-ZEN der Fa. BotriZen Ltd., Neuseeland).
   - Sonstige: Biphenyl, Bronopol, Cyflufenamid, Cymoxanil, Diphenylamin, Metrafenon, Mildiomycin, Oxin-Kupfer, Prohexadion-Calcium, Spiroxamin, Tolylfluanid, N-(Cyclo-propylmethoxyimino-(6-difluormethoxy-2,3-difluor-phenyl)-methyl)-2-phenylacetamid, N'-(4-(4-Chlor-3-trifluormethyl-phenoxy)-2,5-dimethyl-phenyl)-N-ethyl-N-methylformamidin, N'-(4-(4-Fluor-3-trifluormethyl-phenoxy)-2,5-dimethyl-phenyl)-N-ethyl-N-methylformamidin, N'-(2-Methyl-5-trifluormethyl-4-(3-trimethylsilanyl-propoxy)-phenyl)-N-ethyl-N-methylformamidin, N'-(5-Difluormethyl-2-methyl-4-(3-trimethylsilanyl-propoxy)-phenyl)-N-ethyl-N-methylformamidin, 2-{1-[2-(5-Methyl-3-trifluormethyl-pyrazol-1-yl)-acetyl]-piperidin-4-yl}-thiazol-4-carboxylsäure-methyl-(1,2,3,4-tetrahydronaphthalen-1-yl)-amid, 2-{1-[2-(5-Methyl-3-trifluormethyl-pyrazol-1-yl)-acetyl]-piperidin-4-yl}-thiazol-4-carboxylsäure-methyl-(R)-1,2,3,4-tetrahydronaphthalen-1-yl-amid, Essigsäure-6-tert.-butyl-8-fluor-2,3-dimethyl-quinolin-4-yl-ester, Methoxy-essigsäure-6-tert.-butyl-8-fluor-2,3-dimethyl-quinolin-4-yl-ester, *N*-Methyl-2-{1-[2-(5-methyl-3-trifluormethyl-1H-pyrazol-1-yl)-acetyl]-piperidin-4-yl}-*N-*[(1R)-1,2,3,4-tetrahydronaphthalen-1-yl]-4-thiazolcarboxamid;
G) Wachstumsregler
   Abscisinsäure, Amidochlor, Ancymidol , 6-Benzylaminopurin, Brassinolid, Butralin, Chlormequat (Chlormequatchlorid), Cholinchlorid, Cyclanilid, Daminozid, Dikegulac, Dimethipin, 2,6-Dimethylpuridin, Ethephon, Flumetralin, Flurprimidol, Fluthiacet, Forchlorfenuron, Gibberellinsäure, Inabenfid, Indol-3-essigsäure, Maleinsäurehydrazid, Mefluidid, Mepiquat (Mepiquatchlorid), Metconazol, Naphthalenessigsäure, N-6-Benzyladenin, Paclobutrazol, Prohexadion (Prohexadion-Calcium), Prohydrojasmon, Thidiazuron, Triapenthenol, Tributylphosphorotrithioat, 2,3,5-tri-Jodbenzoesäure, Trinexapac-ethyl und Uniconazol;
H) Herbizide
   - Acetamide: Acetochlor, Alachlor, Butachlor, Dimethachlor, Dimethenamid, Flufenacet, Mefenacet, Metolachlor, Metazachlor, Napropamid, Naproanilid, Pethoxamid, Pretilachlor, Propachlor, Thenylchlor;
   - Aminosäureanaloga: Bilanafos, Glyphosat, Glufosinat, Sulfosat;
   - Aryloxyphenoxypropionate: Clodinafop, Cyhalofop-butyl, Fenoxaprop, Fluazifop, Haloxyfop, Metamifop, Propaquizafop, Quizalofop, Quizalofop-P-tefuryl;
   - Bipyridyle: Diquat, Paraquat;
   - Carbamate und Thiocarbamate: Asulam, Butylate, Carbetamide, Desmedipham, Dimepiperat, Eptam (EPTC), Esprocarb, Molinate, Orbencarb, Phenmedipham, Prosulfocarb, Pyributicarb, Thiobencarb, Triallate;
   - Cyclohexanedione: Butroxydim, Clethodim, Cycloxydim, Profoxydim, Sethoxydim, Tepraloxydim, Tralkoxydim;
   - Dinitroaniline: Benfluralin, Ethalfluralin, Oryzalin, Pendimethalin, Prodiamine, Trifluralin;
   - Diphenylether: Acifluorfen, Aclonifen, Bifenox, Diclofop, Ethoxyfen, Fomesafen, Lactofen, Oxyfluorfen;
   - Hydroxybenzonitrile: Bromoxynil, Dichlobenil, loxynil;
   - Imidazolinone: Imazamethabenz, Imazamox, Imazapic, Imazapyr, Imazaquin, Imazethapyr;
   - Phenoxyessigsäuren: Clomeprop, 2,4-Dichlorphenoxyessigsäure (2,4-D), 2,4-DB, Dichlorprop, MCPA, MCPA-thioethyl, MCPB, Mecoprop;
   - Pyrazine: Chloridazon, Flufenpyr-ethyl, Fluthiacet, Norflurazon, Pyridat;
   - Pyridine: Aminopyralid, Clopyralid, Diflufenican, Dithiopyr, Fluridone, Fluroxypyr, Picloram, Picolinafen, Thiazopyr;
   - Sulfonylharnstoffe: Amidosulfuron, Azimsulfuron, Bensulfuron, Chlorimuron-Ethyl, Chlorsulfuron, Cinosulfuron, Cyclosulfamuron, Ethoxysulfuron, Flazasulfuron, Flucetosulfuron, Flupyrsulfuron, Foramsulfuron, Halosulfuron, Imazosulfuron, lodosulfuron, Mesosulfuron, Metsulfuron-methyl, Nicosulfuron, Oxasulfuron, Primisulfuron, Prosulfuron, Pyrazosulfuron, Rimsulfuron, Sulfometuron, Sulfosulfuron, Thifensulfuron, Triasulfuron, Tribenuron, Trifloxysulfuron, Triflusulfuron, Tritosulfuron, 1-((2-Chlor-6-propyl-imidazo[1,2-b]pyridazin-3-yl)sulfonyl)-3-(4,6-dimethoxy-pyrimidin-2-yl)harnstoff;
   - Triazine: Ametryn, Atrazin, Cyanazin, Dimethametryn, Ethiozin, Hexazinon, Metamitron, Metribuzin, Prometryn, Simazin, Terbuthylazin, Terbutryn, Triaziflam;
   - Harnstoffe: Chlorotoluron, Daimuron, Diuron, Fluometuron, Isoproturon, Linuron, Methabenzthiazuron,Tebuthiuron;
   - andere Hemmstoffe der Acetolactatsynthase: Bispyribac-Natrium, Cloransulam-Methyl, Diclosulam, Florasulam, Flucarbazone, Flumetsulam, Metosulam, Ortho-sulfamuron, Penoxsulam, Propoxycarbazone, Pyribambenz-Propyl, Pyribenzoxim, Pyriftalid, Pyriminobac-methyl, Pyrimisulfan, Pyrithiobac, Pyroxasulfon, Pyroxsulam;
   - Sonstige: Amicarbazon, Aminotriazol, Anilofos, Beflubutamid, Benazolin, Bencarbazon, Benfluresat, Benzofenap, Bentazon, Benzobicyclon, Bromacil, Bromobutid, Butafenacil, Butamifos, Cafenstrole, Carfentrazone, Cinidon-Ethlyl, Chlorthal, Cinmethylin, Clomazone, Cumyluron, Cyprosulfamid, Dicamba, Difenzoquat, Diflufenzopyr, *Drechslera monoceras,* Endothal, Ethofumesat, Etobenzanid, Fentrazamide, Flumiclorac-Pentyl, Flumioxazin, Flupoxam, Fluorochloridon, Flurtamon, Indanofan, Isoxaben, Isoxaflutol, Lenacil, Propanil, Propyzamid, Quinclorac, Quinmerac, Mesotrion, Methylarsensäure, Naptalam, Oxadiargyl, Oxadiazon, Oxaziclomefon, Pentoxazon, Pinoxaden, Pyraclonil, Pyraflufen-Ethyl, Pyrasulfotol, Pyrazoxyfen, Pyrazolynat, Quinoclamin, Saflufenacil, Sulcotrion, Sulfentrazon, Terbacil, Tefuryltrion, Tembotrion, Thiencarbazon, Topramezon, 4-Hydroxy-3-[2-(2-methoxy-ethoxymethyl)-6-trifluormethyl-pyridin-3-carbonyl]-bicyclo[3.2.1]oct-3-en-2-on, (3-[2-Chlor-4-fluor-5-(3-methyl-2,6-dioxo-4-trifluormethyl-3,6-dihydro-2H-pyrimidin-1-yl)-phenoxy]-pyridin-2-yloxy)-essigsäureethylester, 6-Amino-5-chlor-2-cyclopropyl-pyrimidin-4-carboxylsäuremethylester, 6-Chlor-3-(2-cyclopropyl-6-methyl-phenoxy)-pyridazin-4-ol, 4-Amino-3-chlor-6-(4-chlor-phenyl)-5-fluor-pyridin-2-carboxylsäure, 4-Amino-3-chlor-6-(4-chlor-2-fluor-3-methoxy-phenyl)-pyridin-2-carboxylsäuremethylester und 4-Amino-3-chlor-6-(4-chloro-3-dimethylamino-2-fluor-phenyl)-pyridin-2-carboxylsäuremethylester;
I) Insektizide
   - Organo(thio)phosphate: Acephat, Azamethiphos, Azinphos-methyl, Chlorpyrifos, Chlorpyrifos-Methyl, Chlorfenvinphos, Diazinon, Dichlorvos, Dicrotophos, Dimethoat, Disulfoton, Ethion, Fenitrothion, Fenthion, Isoxathion, Malathion, Methamidophos, Methidathion, Methyl-Parathion, Mevinphos, Monocrotophos, Oxydemeton-Methyl, Paraoxon, Parathion, Phenthoate, Phosalone, Phosmet, Phosphamidon, Phorate, Phoxim, Pirimiphos-Methyl, Profenofos, Prothiofos, Sulprophos, Tetrachlorvinphos, Terbufos, Triazophos, Trichlorfon;
   - Carbamate: Alanycarb, Aldicarb, Bendiocarb, Benfuracarb, Carbaryl, Carbofuran, Carbosulfan, Fenoxycarb, Furathiocarb, Methiocarb, Methomyl, Oxamyl, Pirimicarb, Propoxur, Thiodicarb, Triazamate;
   - Pyrethroide: Allethrin, Bifenthrin, Cyfluthrin, Cyhalothrin, Cyphenothrin, Cypermethrin, alpha-Cypermethrin, beta-Cypermethrin, zeta-Cypermethrin, Deltamethrin, Esfenvalerat, Etofenprox, Fenpropathrin, Fenvalerate, Imiprothrin, Lambda-Cyhalothrin, Permethrin, Prallethrin, Pyrethrin I und II, Resmethrin, Silafluofen, tau-Fluvalinat, Tefluthrin, Tetramethrin, Tralomethrin, Transfluthrin, Profluthrin, Dimefluthrin,
   - Hemmstoffe des Insektenwachstums: a) Chitinsynthese-Hemmstoffe: Benzoylharnstoffe: Chlorfluazuron, Cyramazin, Diflubenzuron, Flucycloxuron, Flufenoxuron, Hexaflumuron, Lufenuron, Novaluron, Teflubenzuron, Triflumuron; Buprofezin, Diofenolan, Hexythiazox, Etoxazol, Clofentazin; b) Ecdyson-Antagonisten: Halofenozid, Methoxyfenozid, Tebufenozid, Azadirachtin; c) Juvenoide: Pyriproxyfen, Methoprene, Fenoxycarb; d) Lipidbiosynthese-Hemmstoffe: Spirodiclofen, Spiromesifen, Spirotetramat;
   - Nikotinreceptor-Agonisten/Antagonisten: Clothianidin, Dinotefuran, Imidacloprid, Thiamethoxam, Nitenpyram, Acetamiprid, Thiacloprid, 1-(2-chloro-thiazol-5-ylmethyl)-2-nitrimino-3,5-dimethyl-[1,3,5]triazinan;
   - GABA-Antagonisten: Endosulfan, Ethiprol, Fipronil, Vaniliprol, Pyrafluprol, Pyriprol, 5-Amino-1-(2,6-dichlor-4-methyl-phenyl)-4-sulfinamoyl-1H-pyrazol-3-thiocarbonsäureamid;
   - Macrocyclische Lactone: Abamectin, Emamectin, Milbemectin, Lepimectin, Spinosad, Spinetoram;
   - Mitochondriale Elektronentransportketten-Inhibitor (METI) I Akarizide: Fenazaquin, Pyridaben, Tebufenpyrad, Tolfenpyrad, Flufenerim;
   - METI II und III Substanzen: Acequinocyl, Fluacyprim, Hydramethylnon;
   - Entkoppler: Chlorfenapyr;
   - Hemmstoffe der oxidativen Phosphorylierung: Cyhexatin, Diafenthiuron, Fenbutatin-oxid, Propargit;
   - Hemmstoffe der Häutung der Insekten: Cryomazin;
   - Hemmstoffe von ,mixed function oxidases': Piperonylbutoxid;
   - Natriumkanalblocker: Indoxacarb, Metaflumizon;
   - Sonstige: Benclothiaz, Bifenazate, Cartap, Flonicamid, Pyridalyl, Pymetrozin, Schwefel, Thiocyclam, Flubendiamid, Chlorantraniliprol, Cyazypyr (HGW86); Cyenopyrafen, Flupyrazofos, Cyflumetofen, Amidoflumet, Imicyafos, Bistrifluron und Pyrifluquinazon.

Das **erste Pestizid** ist bevorzugt ein Pestizid, das zu mindestens 95 Gew.% löslich ist in einer Mischung aus 2-Ethylhexyllactat und Benzylalkohol (Gewichtsverhältnis 3 zu 1) bei 20 °C. Das erste Pestizid ist besonders bevorzugt Epoxiconazol, Pyraclostrobin, oder Metconazol, speziell Epoxiconazol oder Pyraclostrobin.

Neben dem ersten Pestizid können noch **weitere Pestizide in gelöster Form** vorliegen. Bevorzugte weitere Pestizide, die in gelöster Form vorliegen, sind Epoxiconazol oder Pyraclostrobin.

Die Formulierung enthält in der Regel 0,01 bis 50 Gew.% des ersten Pestizids, bevorzugt 0,5 bis 25 Gew.% und insbesondere 3 bis 15 Gew.%.

Das **zweite Pestizid** ist bevorzugt ein Pestizid, das zu höchstens 5 Gew.% löslich ist in einer Mischung aus 2-Ethylhexyllactat und Benzylalkohol (Gewichtsverhältnis 3 zu 1) bei 20 °C. Das zweite Pestizid ist besonders bevorzugt Boscalid, Chlorothalonil, oder Fluxapyroxad, speziell Boscalid.

Neben dem zweiten Pestizid können noch **weitere Pestizide** in Form suspendierter Teilchen vorliegen.

Die Formulierung enthält in der Regel 0,01 bis 50 Gew.% des zweiten Pestizids, bevorzugt 1 bis 30 Gew.% und insbesondere 8 bis 20 Gew.%.

Das **Gewichtsverhältnis** von erstem zu zweitem Pestizid liegt meist im Bereich von 50 / 1 bis 1 / 50, bevorzugt von 5 / 1 bis 1 / 10 und insbesondere von 2 / 1 bis 1 / 4.

Die erfindungsgemäßen Formulierungen können weiterhin auch für agrochemische Formulierungen übliche **Hilfsmittel** enthalten, wobei sich die Wahl der Hilfsmittel nach der konkreten Anwendungsform bzw. dem Wirkstoff richtet. Beispiele für geeignete Hilfsmittel sind weitere Lösungsmittel, feste Trägerstoffe, oberflächenaktive Stoffe (wie Tenside, Solubilisatoren, Schutzkolloide, Netzmittel und Haftmittel), organische und anorganische Verdicker, Bakterizide, Frostschutzmittel, Entschäumer, ggf. Farbstoffe und Kleber (z. B. für Saatgutbehandlung) oder übliche Hilfsmittel für Köderformulierung (z. B. Lockstoffe, Futtermittel, Bitterstoffe).

Als weitere **Lösungsmittel** neben dem Alkohol und dem Alkyllactat kommen organische Lösungsmittel wie Mineralölfraktionen von mittlerem bis hohem Siedepunkt wie Kerosin und Dieselöl, ferner Kohlenteeröle sowie Öle pflanzlichen oder tierischen Ursprungs, aliphatische, cyclische und aromatische Kohlenwasserstoffe, z.B. Paraffine, Tetrahydronaphthalin, alkylierte Naphthaline und deren Derivate, alkylierte Benzole und deren Derivate, Alkohole wie Methanol, Ethanol, Propanol, Butanol und Cyclohexanol, Glykole, Ketone wie Cyclohexanon, gamma-Butyrolacton, Dimethylfettsäureamide, Fettsäuren und Fettsäureester und stark polare Lösungsmittel, z.B. Amine wie N-Methylpyrrolidon, in Betracht. Grundsätzlich können auch Lösungsmittelgemische verwendet werden sowie Gemische aus den vorstehend genannten Lösungsmitteln und Wasser. Bevorzugt enthält die Formulierung neben dem Alkohol und dem Alkyllactat höchstens 20 Gew.%, bevorzugt höchstens 5 Gew.% und insbesondere höchstens 1 Gew.% weitere Lösungsmittel.

Feste **Trägerstoffe** sind Mineralerden wie Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe. Die Formulierung enthält bevorzugt keine festen Trägerstoffe.

Als **oberflächenaktive Stoffe** (Adjuvantien, Netz-, Haft-, Dispergier- oder Emulgiermittel) kommen die Alkali-, Erdalkali-, Ammoniumsalze von aromatischen Sulfonsäuren, z. B. von Lignin-(Borresperse®-Typen, Borregaard, Norwegen), Phenol-, Naphthalin-(Morwet®-Typen, Akzo Nobel, USA) und Dibutylnaphthalinsulfonsäure (Nekal®-Typen, BASF, Deutschland), sowie von Fettsäuren, Alkyl- und Alkylarylsulfonaten, Alkyl-, Laurylether- und Fettalkoholsulfaten, sowie Salze sulfatierter Hexa-, Hepta- und Octadecanole sowie von Fettalkoholglykolethern, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylenoxid-Kondensate, ethoxyliertes Rizinusöl, Polyoxyethylen- oder Polyoxypropylenalkylether, Laurylalkoholpolyglykoletheracetat, Sorbitester, Lignin-Sulfitablaugen sowie Proteine, denaturierte Proteine, Polysaccharide (z.B. Methylcellulose), hydrophob modifizierte Stärken, Polyvinylalkohol (Mowiol®-Typen, Clariant, Schweiz), Polycarboxylate (Sokalan®-Typen, BASF, Deutschland), Polyalkoxylate, Polyvinylamin (Lupamin®-Typen, BASF, Deutschland), Polyethylenimin (Lupasol®-Typen, BASF, Deutschland), Polyvinylpyrrolidon und deren Copolymere in Betracht.

Als **Tenside** kommen insbesondere anionische, kationische, nicht-ionische und amphotere Tenside, Blockpolymere und Polyelektrolyte in Betracht. Geeignete **anionische** Tenside sind Alkali-, Erdalkali- oder Ammoniumsalze von Sulfonaten, Sulfaten, Phosphaten oder Carboxylaten. Beispiele für Sulfonate sind Alkylarylsulfonate, Diphenylsulfonate, alpha-Olefinsulfonate, Ligninsulfonate, Sulfonate von Fettsäuren und Ölen, Sulfonate von ethoxylierten Alkylphenolen, Sulfonate von kondensierten Naphtalinen, Sulfonate von Dodecyl und Tridecylbenzolen, Sulfonate von Naphthalinen und Alkylnaphthalinen, Sulfosuccinate oder Sulfosuccinamate. Beispiele für Sulfate sind Sulfate von Fettsäure und Ölen, von ethoxylierten Alkylphenolen, von Alkoholen, von ethoxylierten Alkoholen, oder von Fettsäureestern. Beispiele für Phosphate sind Phosphatester. Beispiele für Carboxylate sind Alkylcarboxylate und carboxylierte Alkohol- oder Alkylphenolethoxylate.

Geeignete **nicht-ionische** Tenside sind Alkoxylate, N-alkylierte Fettsäureamide, Aminoxide, Ester oder Zucker-basierte Tenside. Beispiele für Alkoxylate sind Verbindungen, wie Alkohole, Alkylphenole, Amine, Amide, Arylphenole, Fettsäuren oder Fettsäureester, die alkoxyliert wurden. Zur Alkoxylierung kann Ethylenoxid und/oder Propylenoxid eingesetzt werden, bevorzugt Ethylenoxid. Beispiele für N-alkylierte Fettsäureamide sind Fettsäureglucamide oder Fettsäurealkanolamide. Beispiele für Ester sind Fettsäureester, Glycerinester oder Monoglyceride. Beispiele für Zucker-basierte Tenside sind Sorbitane, ethoxilierte Sorbitane, Saccharose- und Glucoseester oder Alkylpolyglucoside.

Geeignete **kationische** Tenside sind quarternäre Tenside, beispielsweise quartäre Ammonium-Verbindungen mit einer oder zwei hydrophoben Gruppen, oder Salze langkettiger primärer Amine. Die erfindungsgemäße Formulierung umfasst bevorzugt bis zu 5,0 Gew.% kationische Tenside, besonders bevorzugt bis zu 0,5 Gew.%, und speziell bis zu 0,05 Gew.%.

Geeignete **amphothere** Tenside sind Alkylbetaine und Imidazoline. Geeignete **Blockpolymere** sind Blockpolymere vom A-B oder A-B-A Typ umfassend Blöcke aus Polyethylenoxid und Polypropylenoxid oder vom A-B-C Typ umfassend Alkanol, Polyethylenoxid und Polypropylenoxid. Geeignete **Polyelektrolyte** sind Polysäuren oder Polybasen. Beispiele für Polysäuren sind Alkalisalze von Polyacrylsäure. Beispiele für Polybasen sind Polyvinylamine oder Polyethylenamine.

Die erfindungsgemäße Formulierung kann 0,1 bis 40 Gew.%, bevorzugt 1 bis 30 und insbesondere 2 bis 20 Gew.% Gesamtmenge von oberflächenaktiven Stoffe und Tensiden umfassen bezogen auf die Gesamtmenge der Formulierung.

Geeignete **Verdicker** sind Verbindungen, die der Formulierung ein modifiziertes Fließverhalten verleihen, d. h. eine hohe Viskosität im Ruhezustand und niedrige Viskosität im bewegten Zustand. Beispiele sind Polysaccharide, Proteine (wie Casein oder gelatine), synthetische Polymere, oder anorganische Schichtmineralien. Solche Verdicker sind kommerziell erhältlich, beispielsweise Xanthan Gum (Kelzan®, CP Kelco, USA), Rhodopol® 23 (Rhodia, Frankreich) oder Veegum® (R.T. Vanderbilt, USA) oder Attaclay® (Engelhard Corp., NJ, USA). Bevorzugte Verdicker sind anorganische Schichtmineralien und Polysaccharide, insbesondere anorganische Schichtmineralien.

Der Gehalt an Verdicker in der Formulierung richtet sich nach der Wirksamkeit des Verdickers. Der Fachmann wird einen Gehalt wählen, um die gewünschte Viskosität der Formulierung zu erhalten. Der Gehalt wird meist 0,01 bis 10 Gew.% betragen.

**Bakterizide** können zur Stabilisierung der Zusammensetzung zugesetzt werden. Beispiele für Bakterizide sind solche basierend auf Diclorophen und Benzylalkoholhemiformal sowie Isothiazolinonderivaten wie Alkylisothiazolinonen und Benzisothiazolinonen (Acticide® MBS der Fa. Thor Chemie). Beispiele für geeignete **Frostschutzmittel** sind Ethylenglycol, Propylenglycol, Harnstoff und Glycerin. Beispiele für **Entschäumer** sind Silikonemulsionen (wie z. B. Silikon® SRE, Wacker, Deutschland oder Rhodorsil®, Rhodia, Frankreich), langkettige Alkohole, Fettsäuren, Salze von Fettsäuren, fluororganische Verbindungen und deren Gemische.

Der Anwender verwendet die erfindungsgemäße Formulierung üblicherweise für die Anwendung in einer Vordosiereinrichtung, im Rückenspritzer, im Spritztank oder im Sprühflugzeug. Dabei wird die Formulierung mit Wasser und/oder Puffer auf die gewünschte Anwendungskonzentration gebracht, wobei gegebenenfalls weitere Hilfsstoffe zugegeben werden, und so die anwendungsbereite Spritzbrühe (sog. **Tankmix**) erhalten wird. Üblicherweise werden 50 bis 500 Liter der anwendungsbereiten Spritzbrühe pro Hektar landwirtschaftlicher Nutzfläche aufgebracht, bevorzugt 100 bis 400 Liter. Die Wirkstoffkonzentrationen in den anwendungsfertigen Zubereitungen können in größeren Bereichen variiert werden. Im Allgemeinen liegen sie zwischen 0,0001 und 10%, vorzugsweise zwischen 0,01 und 1%.

Zu den Wirkstoffen oder den diese enhaltenden Zusammensetzungen können Öle verschiedenen Typs, Netzmittel, **Adjuvantien,** Herbizide, Bakterizide, andere Fungizide und/oder Schädlingsbekämpfungsmittel, gegebenenfalls auch erst unmittelbar vor der Anwendung, dem Tankmix zugesetzt werden. Diese Mittel können zu den erfindungsgemäßen Zusammensetzungen im Gewichtsverhältnis 1:100 bis 100:1, bevorzugt 1:10 bis 10:1 zugemischt werden. Als Adjuvanzien in diesem Sinne kommen insbesondere in Frage: organisch modifizierte Polysiloxane, z. B. Break Thru S 240®; Alkoholalkoxylate, z. B. Atplus® 245, Atplus® MBA 1303, Plurafac® LF 300 und Lutensol® ON 30; EO-PO-Blockpolymerisate, z. B. Pluronic® RPE 2035 und Genapol® B; Alkoholethoxylate, z. B. Lutensol® XP 80; und Natriumdioctylsulfosuccinat, z. B. Leophen® RA.

Die **Aufwandmengen** liegen bei der Anwendung im Pflanzenschutz je nach Art des gewünschten Effektes zwischen 0,001 und 2,0 kg Wirkstoff pro ha, bevorzugt zwischen 0,005 und 2 kg pro ha, besonders bevorzugt zwischen 0,05 und 0,9 kg pro ha, insbesondere zwischen 0,1 und 0,75 kg pro ha.

Die vorliegende Erfindung betrifft weiterhin ein **Verfahren zur Bekämpfung** von phytopathogenen Pilzen und/oder unerwünschtem Pflanzenwuchs und/oder unerwünschtem Insekten- oder Milbenbefall und/oder zur Regulation des Wachstums von Pflanzen, wobei man die erfindungsgemäße Formulierung auf die jeweiligen Schädlinge, deren Lebensraum oder die vor dem jeweiligen Schädling zu schützenden Pflanzen, den Boden und/oder auf unerwünschte Pflanzen und/oder die Nutzpflanzen und/oder deren Lebensraum einwirken lässt.

Die vorliegende Erfindung betrifft weiterhin die Verwendung der erfindungsgemäße Formulierung zur Erhöhung der **Regenfestigkeit** der applizierten Pestizide.

Die vorliegende Erfindung betrifft weiterhin Verwendung der erfindungsgemäße Formulierung zur Erhöhung der **Aufnahme** der applizierten Pestizide in die Pflanze.

**Vorteile** der Erfindung sind dass in einer Formulierung nun suspendierte Wirkstoffe und gelöste Wirkstoffe kombiniert werden können, so dass beispielsweise auf einen aufwendige Tankmischung der Einzelformulierungen verzichtet werden kann. Die Formulierung ist lagerstabil (sogar bei mehrfacherAbkühlung unter 0 °C) und kristallisiert nicht aus. Die Pestizide haben eine hohe Regenfestigkeit. Die Pestizide werden sehr schnell und in hohen Mengen in das Blatt der behandelten Pflanze aufgenommen. Die Pestizide zeigen eine höhere Wirksamkeit im Vergleich zu herkömmlich formulierten Wirkstoffen. Der Ertrag der behandelten Pflanzen steigt.

Nachfolgende Beispiele erläutern die Erfindung ohne sie einzuschränken.

### Beispiele

Nichtionisches Tensid A: Alkoxylierter Fettalkohol, flüssig bei 25 °C; Oberlfächenspannung bei 1 g/l in Wasser bei 23 °C (DIN 53 914) 28 bis 31 mN/m; Trübungspunkt nach EN 1890 Methode A 21-22 °C; Stockpunkt nach DIN 51583 -10 °C
Nichtionisches Tensid B: Polyaromatisches Ethoxylat, Stockpunkt 14 °C; Oberlfächenspannung bei 0,1 % in Wasser bei 25 °C (DIN 53 914) 40 bis 41 mN/m.
Nichtionisches Tensid C: Organo-modifiziertes Siloxan, flüssig, pH-neutral in Wasser, Stockpunkt -10 °C.
Nichtionisches Tensid D: Ethoxylatpropoxylat eines kurzkettigen Fettalkohols, Schmelzpunkt 30 °C, Oberlfächenspannung bei 0,1 % in Wasser bei 25 °C (DIN 53 914) 31-32 mN/m
Nichtionisches Tensid E: Tristyrylphenol Ethoxylate.
Nichtionisches Tensid F: Rizinusöl, ethoxyliert; flüssig, wasserlöslichkeit 200 g/l; Oberflächenspannung 44-45 mN/m (OECD-Ringmethode).
Anionisches Tensid A: Polyetherphosphat, pH in Wasser (100 g/l) bei 23 °C 2,0.
Anionisches Tensid B: Alkylbenzolsulfonat 60 Gew.% gelöst in verzweigtem Alkohol, Stockpunkt -31 °C.
Verdicker A: organisch modifiziertes Hectorit, feinteiliges Pulver.
Verdicker B: Schichtsilikat auf Basis eines organisch modifizierten Smektit, feinteiliges Pulver.

### Beispiel 1 - Epoxiconazol & Boscalid in EHL & Benzylalkohol

Epoxiconazol wurde in einer Mischung aus 200 g 2-Ethylhexyl-(*S*)-lactat (EHL) und 125 g Benzylalkohol gerührt bis der Wirkstoff gelöst war. Dann wurden die weiteren Formulierungshilfsmittel zugegeben (siehe Tabelle 1) und für 10 min gerührt. Schließlich wurde Boscalid zugegeben, 5 min gerührt und mit 2-Ethylhexyllactat auf 1,0 l aufgefüllt. Die resultierende Suspension wurde mit einer Kugelmühle gemahlen. Die Partikelgröße lag bei unter 4 µm (50 %) bzw. unter 25 µm (90 %).

Stabilitätstest: Die Formulierung wurde eine Woche lang Temperaturzyklus von -10 °C bis +10 °C unterworfen. Die Formulierung war stabil und man fand keine Ablagerung der suspendierten Partikel. Die Viskosität der Formulierung war ebenfalls gleichbleibend stabil. Man fand auch kein Kristallwachstum.

### Beispiel 2 - Epoxiconazol & Pyraclostrobin & Boscalid in EHL & Benzylalkohol

Epoxiconazol und Pyraclostrobin wurden in einer Mischung aus 200 g 2-Ethylhexyllactat und 125 g Benzylalkohol gerührt bis die beiden Wirkstoffe gelöst waren. Dann wurden die weiteren Formulierungshilfsmittel zugegeben (siehe Tabelle 1) und für 10 min gerührt. Schließlich wurde Boscalid zugegeben, 5 min gerührt und mit 2-Ethylhexyllactat auf 1,0 l aufgefüllt. Die resultierende Suspension wurde mit einer Kugelmühle gemahlen. Die Partikelgröße lag bei unter 4 µm (50 %) bzw. unter 25 µm (90 %).

Der Stabilitätstest (siehe Beispiel 1) zeigte wieder eine stabile Formulierung: Die Formulierung war stabil und man fand keine Ablagerung der suspendierten Partikel. Die Viskosität der Formulierung war ebenfalls gleichbleibend stabil. Man fand auch kein Kristallwachstum.

### Beispiel 3 - Epoxiconazol & Boscalid in Benzylalkohol (nicht erfindungsgemäß)

Epoxiconazol wurde in einer Mischung aus 300 g Benzylalkohol gerührt bis der Wirkstoff gelöst war. Dann wurden die weiteren Formulierungshilfsmittel zugegeben (siehe Tabelle 1) und für 10 min gerührt. Schließlich wurde Boscalid zugegeben, 5 min gerührt und mit Benzylalkohol auf 1,0 l aufgefüllt. Die resultierende Suspension wurde mit einer Kugelmühle gemahlen. Die Partikelgröße lag bei unter 4 µm (50 %) bzw. unter 25 µm (90 %).

Beim Stabilitätstest (siehe Beispiel 1) bildeten sich große Kristalle von Boscalid und eine irreversible Phasentrennung wurde beobachtet.

### Beispiel 4 - Epoxiconazol & Boscalid in EHL (nicht erfindungsgemäß)

Epoxiconazol wurde in einer Mischung aus 300 g 2-Ethylhexyllactat gerührt, wobei der Wirkstoff suspendiert wurde. Dann wurden die weiteren Formulierungshilfsmittel zugegeben (siehe Tabelle 1) und für 10 min gerührt. Schließlich wurde Boscalid zugegeben, 5 min gerührt und mit 2-Ethylhexyllactat auf 1,0 l aufgefüllt. Die resultierende Suspension wurde mit einer Kugelmühle gemahlen. Die Partikelgröße lag bei unter 4 µm (50 %) bzw. unter 25 µm (90 %).

Beim Stabilitätstest (siehe Beispiel 1) war Epoxiconazol nur teilweise löslich. Es wurde eine irreversible Phasentrennung beobachtet.

### Beispiel 5 - Epoxiconazol & Boscalid in EHL & Benzylalkohol & Wasser (nicht erfindungsgemäß)

Epoxiconazol wurde in einer Mischung aus 200 g 2-Ethylhexyllactat und 125 g Benzylalkohol gerührt bis der Wirkstoff gelöst war. Dann wurden die weiteren Formulierungshilfsmittel zugegeben (siehe Tabelle 1), für 10 min gerührt und dann mit 2-Ethylhexyllactat auf 1,0 l aufgefüllt (Mischung A).
Ein wässriges Suspensionskonzentrat (280 ml) enthaltend 500 g/l Boscalid und 1,7 Gew.% Phenolsulfosäure-Formaldehyd-Polykondensat Natriumsalz wurde auf 1,5 l mit Wasser aufgefüllt. Unter langsamen Rühren wurde Mischung A zugegeben und schließlich mit Wasser auf 3,0 l aufgefüllt. Man erhielt eine wässrige Suspoemulsion.

Beim Stabilitätstest (siehe Beispiel 1) bildeten sich Kristalle von Epoxiconazol. Die Suspoemulsion war nicht stabil.

**Tabelle 1: Zusammensetzung der Beispiele 1 bis 5 (alle Konzentrationen in g/l)**

| Beispiel Nr. | 1 | 2 | 3^{a)} | 4^{a)} | 5^{a)} | 6^{a)} |
|---|---|---|---|---|---|---|
| Boscalid | 140 | 140 | 140 | 140 | 140 | - |
| Epoxiconazole | 50 | 50 | 50 | 50 | 50 | - |
| Pyraclostrobin | - | 60 | - | - | - | 60 |
| Nichtionisches Tensid A | 100 | 100 | 100 | 100 | 100 | 100 |
| Nichtionisches Tensid B | 18 | 18 | 18 | 18 | 18 | 18 |
| Verdicker A | 8 | - | 8 | 8 | - | - |
| Verdicker B | - | 15 | - | - | - | 15 |
| Anionisches Tensid A | 40 | 40 | 40 | 40 | 40 | 40 |
| Nichtionisches Tensid C | - | 100 | - | - | - | 100 |
| Nichtionisches Tensid D | 18 | 18 | 18 | 18 | 18 | 18 |
| Propylencarbonat | 2,4 | - | 2,4 | 2,4 | - | - |
| Nichtionisches Tensid E | 60 | 60 | 60 | 60 | 60 | 60 |
| Nichtionisches Tensid F | - | 50 | - | - | - | 50 |
| Anionisches Tensid B | 24 | 24 | 24 | 24 | 24 | 24 |
| Benzylalkohol | 125 | 125 | ad 1 l | - | 125 | 125 |
| 2-Ethylhexyl-(*S*)-lactat | ad 1 l | ad 1 l | - | ad 1 l | ad 1 l | ad 1 l |
| Wasser | - | - | - | - | ad 3 l | - |

| | | | | | | |
|---|---|---|---|---|---|---|
| a) nicht erfindungsgemäß | | | | | | |

### Beispiel 6 - Regenfestigkeit

Weizenpflanzen (15 Pflanzen pro Topf, je 4 Töpfe) wurden mit den Formulierungen aus Beispiel 1 oder 2 besprüht jeweils mit einer Aufwandmenge von 2,5 l/ha. Zum Vergleich wurde eine Versuchsreihe nicht besprüht. Eine Stunde nach dem Besprühen wurde Regen simuliert in einer Menge von 30 mm. Zum Vergleich wurde jeweils eine Versuchsreihe nicht beregnet. Nach 36 Tagen wurde der Befall mit *Septoria* bonitiert. Die Ergebnisse sind in Tabelle 2 zusammengefasst. Als Vergleich (nicht erfindungsgemäß) wurde Bell® von BASF SE eingesetzt (ein wässriges Suspensionskonzentrat von 233 g/l (20,8 Gew.%) Boscalid und 67 g/l (6 Gew.%) Epoxiconazol, 11,2-12,6 Gew.% Fettalkoholalkoxylat) wobei die gleiche Aufwandmenge benutzt wurde. Der Versuch zeigte, dass die Regenfestigkeit der erfindungsgemäßen Formulierungen sehr gut ist.

**Tabelle 2: Regenfestigkeit (% Befall mit Septoria)**

| Formulierung | Ohne Beregnung [% Befall] | Mit Beregnung [% Befall] | Mit Beregnung [% Befall] |
|---|---|---|---|
| Ohne Behandlung | 78 | 85 | 75 |
| Beispiel 1 | 0 | 0 | 0 |
| Beispiel 2 | 0 | 0 | 0 |
| Bell®^{a)} | 0 | 7 | 6 |

| | | | |
|---|---|---|---|
| a) nicht erfindungsgemäß | | | |

### Beispiel 7 - Spreitung des Spritztropfens auf der Blattoberfläche

Zur Bestimmung des Spreitverhaltens von Spritztropfen wurden Spritzbrühen in der üblichen Feldkonzentration in CIPAC Wasser D angesetzt. Jeweils 1 µl Tropfen wurden mit einer Hamilton Spritze auf die Blattoberfläche gesetzt und das Ausbreiten der Spritztropfens während des Eintrocknens mit Hilfe eines Stereomikroskop visuell verfolgt. Die Größe des Tropfens unmittelbar nach dem Aufsetzen (F₀) und die Größe des Tropfens nach dem Trocknen (F_{E}) wurden ausgemessen. Die Versuche wurden mehrfach wiederholt und Mittelwerte gebildet. Die Auswertung erfolgte nach folgender Formel: Spreitfaktor (in Prozent) = F_{E} : F₀ x 100 %.

Der Versuch zeigte die höhere Spreitung Formulierung auf Blattoberflächen.

**Tabelle 3: Spreitung**

| Spritzbrühe aus Formulierung von | Spreitfaktor |
|---|---|
| Bespiel 1 | > 1000% |
| Bespiel 2 | > 1000% |
| Bell® ^{a)} | ∼600 % |

| | |
|---|---|
| a) nicht erfindungsgemäß | |

### Beispiel 8 - Wirkstoffaufnahme

Zur Bestimmung der Wirkstoffaufnahme wurden Weizenpflanzen (Melon, Winterweizen) im Gewächshaus bis zum Stadium 36 BBCH angezogen. Die Applikation mit den entsprechenden Formulierungen (siehe Tabelle 4, 5) erfolgte in einer Laborspritzbahn mit folgenden Parametern:

| | |
|---|---|
| Produktaufwandmenge: | Entsprechend der Feldkonzentration |
| Wasseraufwandmenge: | 200 l/ha |
| Düsentyp: | Lechler ID 120 02 (Air-Injektor-Flachstrahldüsen) |
| Druck: | 3.33 bar |
| Fahrgeschwindigkeit: | 5 km/h |

Nach der Applikation wurden die Weizenpflanzen wieder für 7 Tage im Gewächshaus weiterkultiviert. Danach wurden die behandelten Blätter abgeschnitten und gewogen. In einem ersten Schritt wurden 30 - 40 g Blätter in ca. 5 cm Stücke kleingeschnitten und mit 200 ml Methanol (50 %) gewaschen. Danach erfolgte ein weiterer Waschschritt mit 100 ml Methanol (50 %). Die Waschmedien wurden von den Blättern getrennt, vereint, und mittels LC-MS-MS analysiert (Tabelle 4, 5 "Abwaschbar").
Anschließend wurden die Blätter mit 400 ml Extraktionsmedium (70 % Methanol, 25 % Wasser, 5 % 2 N HCl) versetzt und mit einem Dispergierstab zerkleinert. Ein Aliquot (ca. 10 ml) des Überstandes wurde in ein Zentrifugenglas überführt und 5 min bei 3000 U/min zentrifugiert. 2 ml von dem Überstand wurde in ein Reagenzglas gegeben, das 2 ml 0.2 N NaOH enthielt. 5 ml Cyclohexan wurden zugesetzt und die Mischung 20 min geschüttelt. 1 ml Aliquot der Cyclohexan-Phase wurden in eine Chromatographie Vial pipettiert und mittels Stickstoff bis zur Trockne evaporiert. Der Rückstand wurde in 1 ml Methanol (50 %) aufgenommen, verdünnt und wie die Waschlösung mittels LC-MS-MS analysiert (Tabelle 4, 5 "Aufnahme").
Die Wiederfindungsrate der verschiedenen Wirkstoffe wurd mit unbehandelten Pflanzen und Wirkstoffzugaben von 1 und 5 mg/kg Blattmasse bestimmt. Zum Vergleich wurden die kommerziell erhältlichen Formulierungen Bell® und Diamant® (Suspoemulsion, 114 g/l Pyraclostrobin, 43 g/l Epoxiconazol, 214 g/l Fenpropimorph, 17 Gew.% Solventnaphtha, 11 Gew.% Fettalkoholalkoxylat, 5 Gew.% henolsulfonsäure-Formaldehyd-Polykondensat Natriumsalz) von BASF SE eingesetzt, sowie die ein wässriges Suspensionskonzentrat mit 160 g/l Epoxiconazol, 260 g/l Pyraclostrobin ("Vergleich A").

Die Versuche zeigten, dass die erfindungsgemäß formulierten Wirkstoffe besser in die Pflanzen aufgenommen werden als bekannte Formulierungen dieser Wirkstoffe.

**Tabelle 4: Wirkstoffaufnahme**

| | Bell®^{a)} | | Beispiel 1 | |
|---|---|---|---|---|
| | Abwaschbar | Aufnahme | Abwaschbar | Aufnahme |
| Epoxiconazol | 75 | 25 | 29 | 71 |
| Boscalid | 94 | 6 | 92 | 8 |

| | | | | |
|---|---|---|---|---|
| a) nicht erfindungsgemäß | | | | |

**Tabelle 5: Wirkstoffaufnahme**

| | Vergleich A ^{a)} | | Bell®+ Diamant® ^{a), b)} | | Beispiel 2 | |
|---|---|---|---|---|---|---|
| | Abwaschbar | Aufnahme | Abwaschbar | Aufnahme | Abwaschbar | Aufnahme |
| Epoxiconazol | 90 | 10 | 63 | 37 | 21 | 79 |
| Boscalid | -- | -- | 91 | 9 | 90 | 10 |
| Pyraclostrobin | 92 | 8 | 66 | 34 | 52 | 48 |

| | | | | | | |
|---|---|---|---|---|---|---|
| a) nicht erfindungsgemäß; b) Gewichtsverhältnis 1 /1. | | | | | | |

### Beispiel 9 - Biologische Wirksamkeit

Die biologische Wirksamkeit gegen *Septoria tritici* wurde an Weizenpflanzen in Feldversuchen bei Anwendung zu BBCH 31-59 getestet. 21-42 Tage nach Applikation wurde der Befall von *Septoria* bonitiert und der Wirkungsgrad berechnet. Während bei mit Bell® behandelten Pflanzen ein mittlerer Wirkungsgrad (n=4) von 72 % gefunden wurde, zeigte die Formulierung aus Beispiel 1 eine mittlere Wirksamkeit von 90 %.

### Beispiel 10 - Ertragssteigerung

Der Ertrag von Weizen wurde in Feldversuchen in Europa gemessen. Die unbehandelten Felder hatten im Mittel (n=13) einen Ertrag von 85,1 dt/ha, die mit Bell® behandelten Felder 97,8 dt/ha und die mit der Formulierung aus Beispiel 1 behandelten Felder 101,6 dt/ha.

### Beispiel 11 - Biologische Wirksamkeit

Die biologische Wirksamkeit gegen die Netzfleckenkrankheit wurde an Gerstenpflanzen bei Anwendung zu BBCH 31-62 getestet. 21-42 Tage nach Applikation wurde der Befall bonitiert und der Wirkungsgrad berechnet. Während bei den mit Bell® behandelten Pflanzen eine mittlere Wirksamkeit (n=8) von 71 % gefunden wurde, zeigte die Formulierung aus Beispiel 1 eine mittlere Wirksamkeit von 84 %.

### Beispiel 12 - Biologische Wirksamkeit

Die biologische Wirksamkeit gegen Braunrost wurde an Winterweizen bei Anwendung zu BBCH 32-59 getestet. 30-50 Tage nach der Applikation wurde der Befall bonitiert und der Wirkungsgrad berechnet. Während bei den mit Bell® behandelten Pflanzen eine mittlere Wirksamkeit (n=6) von 83 % gefunden wurde, zeigte die Formulierung aus Beispiel 1 eine mittlere Wirksamkeit von 88 %, und die Formulierung aus Beispiel 2 eine mittlere Wirksamkeit von 95 %.

### Beispiel 13 - Biologische Wirksamkeit

Die biologische Wirksamkeit gegen *Rhynchosporium* wurde an Gerste bei Anwendung zu BBCH 31-49 getestet. 20-50 Tage nach der Applikation wurde der Befall bonitiert und der Wirkungsgrad berechnet. Während bei den mit Bell® behandelten Pflanzen eine mittlere Wirksamkeit (n=4) von 55 % gefunden wurde, zeigte die Formulierung aus Beispiel 1 eine mittlere Wirksamkeit von 65 %, und die Formulierung aus Beispiel 2 eine mittlere Wirksamkeit von 77 %.

## Patentansprüche

1. Wasserfreie Formulierung umfassend
a) ein erstes Pestizid in gelöster Form,
b) ein zweites Pestizid in Form suspendierter Teilchen,
c) 15 bis 50 Gew.% 2-Ethylhexyllactat, und
d) 3 bis 30 Gew.% Alkohol, wobei der Alkohol als funktionelle Gruppen nur mindestens eine alkoholische Gruppe enthält, wobei die alkoholische Gruppe bevorzugt ein primäre Alkoholgruppe oder eine phenolische Alkoholgruppe ist,
und wobei das Gewichtsverhältnis von 2-Ethylhexyllactat zu dem Alkohol im Bereich von 5/1 1 bis 1 / 1 liegt.

2. Formulierung nach Anspruch 1, wobei der Alkohol Benzylalkohol oder 2-(1-Methylpropyl)phenol ist.

3. Formulierung nach Anspruch 1 oder 2 enthaltend 7 bis 18 Gew.%, Alkohol.

4. Formulierung nach einem der Ansprüche 1 bis 3, wobei das erste Pestizid zu mindestens 95 Gew.% löslich ist in einer Mischung aus drei Gewichtsteilen 2-Ethylhexyllactat und einem Gewichtsteil Benzylalkohol bei 20 °C.

5. Formulierung nach einem der Ansprüche 1 bis 4, wobei das zweite Pestizid zu höchstens 5 Gew.% löslich ist in einer Mischung aus drei Gewichtsteilen 2-Ethylhexyllactat und einem Gewichtsteil Benzylalkohol bei 20 °C.

6. Formulierung nach einem der Ansprüche 1 bis 5, wobei das erste Pestizid Epoxiconazol, Pyraclostrobin, oder Metconazol ist.

7. Formulierung nach einem der Ansprüche 1 bis 6, wobei das zweite Pestizid Boscalid, Chlorothalonil, oder Fluxapyroxad ist.

8. Formulierung nach einem der Ansprüche 1 bis 7, wobei die mittlere Teilchengröße D₉₀ des zweiten Pestizides kleiner als 50 µm ist.

9. Verfahren zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen, wobei man die Formulierung gemäß einem der Ansprüche 1 bis 8 auf die jeweiligen Schädlinge, deren Lebensraum oder die vor dem jeweiligen Schädling zu schützenden Pflanzen, den Boden und/oder auf unerwünschte Pflanzen und/oder die Nutzpflanzen und/oder deren Lebensraum einwirken lässt.

10. Verwendung der Formulierung gemäß einem der Ansprüche 1 bis 8 zur Erhöhung der Regenfestigkeit der applizierten Pestizide.

11. Verwendung der Formulierung gemäß einem der Ansprüche 1 bis 8 zur Erhöhung der Aufnahme der applizierten Pestizide in die Pflanze.

## Claims

1. An anhydrous formulation comprising
a) a first pesticide in dissolved form,
b) a second pesticide in the form of suspended particles,
c) 15 to 50% by weight of 2-ethylhexyl lactate, and
d) 3 to 30% by weight of alcohol, where the alcohol comprises, as functional groups, only at least one alcoholic group, where the alcoholic group is preferably a primary alcohol group or a phenolic alcohol group,
and where the weight ratio of 2-ethylhexyl lactate to the alcohol is in the range from 5/1 to 1/1.

2. The formulation according to claim 1, where the alcohol is benzyl alcohol or 2-(1-methylpropyl)phenol.

3. The formulation according to claim 1 or 2, comprising 7 to 18% by weight of alcohol.

4. The formulation according to any one of claims 1 to 3, where the first pesticide is soluble to at least 95% by weight in a mixture of three parts by weight of 2-ethylhexyl lactate and one part by weight of benzyl alcohol at 20°C.

5. The formulation according to any one of claims 1 to 4, where the second pesticide is soluble to at most 5% by weight in a mixture of three parts by weight of 2-ethylhexyl lactate and one part by weight of benzyl alcohol at 20°C.

6. The formulation according to any one of claims 1 to 5, where the first pesticide is epoxiconazole, pyraclostrobin, or metconazole.

7. The formulation according to any one of claims 1 to 6, where the second pesticide is boscalid, chlorothalonil, or fluxapyroxad.

8. The formulation according to any one of claims 1 to 7, where the average particle size D₉₀ of the second pesticide is less than 50 µm.

9. A method of controlling phytopathogenic fungi and/or undesired plant growth and/or undesired insect or mite infestation and/or of regulating the growth of plants, where the formulation according to any one of claims 1 to 8 is allowed to act on the pests in question, their habitat or the plants to be protected from the particular pest, the soil and/or on undesired plants and/or the useful plants and/or their habitat.

10. The use of the formulation according to any one of claims 1 to 8 for increasing the rain resistance of the applied pesticides.

11. The use of the formulation according to any one of claims 1 to 8 for increasing the absorption of the applied pesticides into the plant.

## Revendications

1. Formulation anhydre, comprenant :
a) un premier pesticide sous forme dissoute,
b) un deuxième pesticide sous la forme de particules suspendues,
c) 15 à 50 % en poids de lactate de 2-éthylhexyle et
d) 3 à 30 % en poids d'un alcool, l'alcool contenant en tant que groupes fonctionnels uniquement au moins un groupe alcoolique, le groupe alcoolique étant de préférence un groupe alcool primaire ou un groupe alcool phénolique,
et le rapport en poids entre le lactate de 2-éthylhexyle et l'alcool se situant dans la plage allant de 5/1 à 1/1.

2. Formulation selon la revendication 1, dans laquelle l'alcool est l'alcool benzylique ou le 2-(1-méthylpropyl)phénol.

3. Formulation selon la revendication 1 ou 2, contenant 7 à 18 % en poids d'alcool.

4. Formulation selon l'une quelconque des revendications 1 à 3, dans laquelle le premier pesticide est soluble à hauteur d'au moins 95 % en poids dans un mélange de trois parties en poids de lactate de 2-éthylhexyle et d'une partie en poids d'alcool benzylique à 20 °C.

5. Formulation selon l'une quelconque des revendications 1 à 4, dans laquelle le deuxième pesticide est soluble à hauteur d'au plus 5 % en poids dans un mélange de trois parties en poids de lactate de 2-éthylhexyle et d'une partie en poids d'alcool benzylique à 20 °C.

6. Formulation selon l'une quelconque des revendications 1 à 5, dans laquelle le premier pesticide est l'époxiconazole, la pyraclostrobine ou le metconazole.

7. Formulation selon l'une quelconque des revendications 1 à 6, dans laquelle le deuxième pesticide est le boscalide, le chlorothalonil ou le fluxapyroxad.

8. Formulation selon l'une quelconque des revendications 1 à 7, dans laquelle la taille de particule moyenne D₉₀ du deuxième pesticide est inférieure à 50 µm.

9. Procédé de lutte contre des champignons phytopathogènes et/ou une végétation indésirable et/ou une infestation indésirable par des insectes ou des acariens et/ou de régulation de la croissance de plantes, selon lequel la formulation selon l'une quelconque des revendications 1 à 8 est laissée agir sur les nuisibles en question, leur habitat ou les plantes à protéger du nuisible en question, le sol et/ou sur les plantes indésirables et/ou les plantes utiles et/ou leur habitat.

10. Utilisation de la formulation selon l'une quelconque des revendications 1 à 8 pour augmenter la résistance à la pluie des pesticides appliqués.

11. Utilisation de la formulation selon l'une quelconque des revendications 1 à 8 pour augmenter d'absorption des pesticides appliqués dans les plantes.
